# EUROPÄISCHE PATENTSCHRIFT

(11) **EP 3 669 500 B1**
(45) Veröffentlichungstag und Bekanntmachung des Hinweises auf die Patenterteilung: **05.05.2021**
(21) Anmeldenummer: 18756170.9
(22) Anmeldetag: 09.08.2018
(51) Int. Cl.: H04L 12/40, B60R 21/01, H04L 29/12, B60R 16/023

(54) **VERFAHREN ZUM BETREIBEN EINER SENSORANORDNUNG IN EINEM KRAFTFAHRZEUG AUF BASIS EINES DSI-PROTOKOLLS**
METHOD FOR OPERATING A SENSOR ARRANGEMENT IN A MOTOR VEHICLE ON THE BASIS OF A DSI PROTOCOL
PROCÉDÉ DE FONCTIONNEMENT D'UN AGENCEMENT DE CAPTEURS DANS UN VÉHICULE AUTOMOBILE SUR LA BASE D'UN PROTOCOLE DSI

(30) Priorität: 15.08.2017 DE 102017118567
(43) Veröffentlichungstag der Anmeldung: 24.06.2020
(73) Patentinhaber: Valeo Schalter und Sensoren GmbH, 74321 Bietigheim-Bissingen (DE)
(72) Erfinder: LEWANDOWSKI, Marek, 74321 Bietigheim-Bissingen (DE)
(74) Vertreter: Enge, Sebastian
(86) Internationale Anmeldenummer: PCT/EP2018/071593
(87) Internationale Veröffentlichungsnummer: WO 2019/034511

(56) Entgegenhaltungen:
- US-A1- 2016 109 489
- Anonymous: "DSI3 Bus Standard", , 16. Februar 2011 (2011-02-16), Seiten 1-45, XP055510946, Gefunden im Internet: URL:https://www.dsiconsortium.org/download s/DSI3_%20Bus_Standard_r1.00.pdf [gefunden am 2018-09-28] in der Anmeldung erwähnt

## Beschreibung

Die Erfindung betrifft ein Verfahren zum Betreiben einer Sensoranordnung in einem Kraftfahrzeug auf Basis eines DSI-Protokolls, wobei die Sensoranordnung eine Zentraleinheit als Master und eine Mehrzahl von Sensoreinheiten als von dem Master gesteuerte Slaves aufweist, die Zentraleinheit und die Sensoreinheiten an eine Zweidraht-Busleitung angeschlossen sind und über die Zweidraht-Busleitung eine Kommunikation zwischen der Zentraleinheit und den Sensoreinheiten erfolgt. Die Erfindung betrifft ferner die Verwendung eines solchen Verfahrens in einem Kraftfahrzeug, eine Sensoranordnung sowie ein nichtflüchtiges, computerlesbares Speichermedium mit darauf abgespeicherten Befehlen, die bei ihrer Ausführung auf einem Prozessor ein solches Verfahren bewirken.

Das DSI-Protokoll Distributed System Interface, siehe: DSI3 Bus Standard, Revision 1.00 vom 16. Februar 2011, dessen Spezifikation hiermit durch explizite Einbeziehung zum Teil der Offenbarung der vorliegenden Erfindung gemacht wird, ist ein Protokoll, das es gestattet, auf Basis einer einfachen Zweidraht-Verkabelung ein Sensor-Netzwerk aufzubauen, in dem ein Master mit einem oder mehreren Slaves über eine Zweidraht-Busleitung kommuniziert. Das DSI-Protokoll richtet sich dabei primär auf die Verwendung in Kraftfahrzeugen, um mittels des Masters eine Mehrzahl von Slaves, insbesondere Sensoren und Aktoren, abzufragen und/oder anzusteuern.

Die Spezifikation des DSI-Protokolls sieht dabei vor, dass eine solche Sensoranordnung in einer von zwei Betriebsklassen betrieben werden kann, und zwar einerseits in der "Signal Function Class", andererseits in der "Power Function Class". Das Protokoll sieht weiterhin grundsätzlich drei unterschiedliche Typen der Nutzung des Busses zwischen dem Master und den Slaves vor:
Im CRM-Modus (Command and Response Modus) findet eine bidirektionale Kommunikation zwischen dem Master und den Slaves statt. Der Master sendet ein Kommando (Command), auf das die Slaves antworten (Response). Dieses Verfahren wird beispielsweise verwendet, um die Slaves zu konfigurieren oder um bestimmte Werte gezielt von einem Slave abzufragen.
Im PDCM-Modus (Periodic Data Collection Mode) übertragen die Slaves vergleichsweise große Datenmengen innerhalb eines vorgegebenen Zeitschlitzes an den Master, wobei die Sendetätigkeit des Masters sich darauf beschränkt, durch ein Synchronisierungssignal (Broadcast Read Command) den Slaves einen Bezugspunkt zur Bestimmung dieses Zeitschlitzes zur Verfügung zu stellen. Die Slaves sind bereits zuvor mit Informationen zu ihrem jeweiligen Zeitschlitz ausgestattet worden, so dass sie in Reaktion auf das Synchronisierungssignal ihr jeweiliges Sendezeitintervall bestimmen und auf Basis dessen ihre Sensordaten an den Master senden können.

In der Energieversorgungsphase findet die Übertragung von vergleichsweise großen Mengen elektrischer Energie statt, um die Slaves mit hohem Energiebedarf mit ausreichend Energie zu versorgen.

Die oben genannte Signal Function Class gemäß der oben genannten Spezifikation dient primär der Anbindung von Slaves mit geringem Energiebedarf und vergleichsweise hohem Datenaufkommen, das von dem Slave zum Master zu senden ist. Nach Inbetriebnahme einer Sensoranordnung der Signal Function Class findet zunächst eine Phase der Kommunikation im CRM-Modus zwischen dem Master und dem Slave statt, im Rahmen derer der Slave üblicherweise konfiguriert wird, beispielsweise in Hinblick auf die Parameter des oben genannten PDCM-Zeitschlitzes dieses Slaves. Ist diese Phase abgeschlossen, so geht die Sensoranordnung in den PCDM-Modus über, in dem immer in Reaktion auf das Synchronisierungssignal des Masters die Slaves die erfassten Daten im jeweils zugeordneten Zeitschlitz an die Zentralinstanz senden. Diese Phase im PDCM-Modus wird üblicherweise nicht mehr verlassen, bis der Betrieb der Sensoranordnung unterbrochen wird. Eine Energieversorgungsphase ist gemäß Signal Function Class nicht vorgesehen und aufgrund des geringen Energiebedarfs der Slaves auch nicht erforderlich.

Die oben genannte Power Function Class dient primär der Anbindung von Slaves mit vergleichsweise hohem Energiebedarf und vergleichsweise geringem Datenaufkommen, das von dem Master zum Slave zu senden ist. Im Betrieb einer Sensoranordnung der Power Function Class finden im Wechsel einerseits Phasen der Kommunikation zwischen dem Master und dem Slave im CRM-Modus sowie andererseits Energieversorgungsphasen statt. Dabei überwiegen zeitlich üblicherweise die Energieversorgungsphasen deutlich.

Für die Busspannung sind im DSI3 Bus Standard für die Energieversorgungsphasen einerseits und die Phasen der Kommunikation andererseits verschiedene Spannungsbereiche definiert. Für die Phasen der Kommunikation sind zum Übertragen von Informationen eine obere Spannung V_{HIGH}-_{PWR} und eine untere Spannung V_{LOW-PWR} definiert. Die Spannung V_{HIGH}-_{PWR} soll 4 V und darf maximal 4,5 V und minimal 3,5 V betragen. Die V_{LOW-PWR} soll 2 V und darf maximal 2,25 V und minimal 1,75 V betragen. Die Busspannung während der Energieversorgungsphasen ist als Leerlaufspannung V_{IDLE} bezeichnet, darf maximal 25 V betragen und muss jedenfalls 1 V über der verwendeten Spannung V_{HIGH}-_{PWR} liegen. Würde also mit der minimal zulässigen Spannung von 3,5 für V_{HIGH}-_{PWR} gearbeitet, müsste V_{IDLE} bei mindestens 4,5 V liegen. Die Bezeichnung als Leerlaufspannung rührt im Übrigen daher, dass die Sensoreinheiten während der Energieversorgungsphase insofern im Leerlauf sind, als dass sie nur elektrische Energie empfangen und nicht zur Durchführung irgendwelcher Aktionen angesteuert werden.

Durch die Speisung der Slaves in diesen Phasen mit vergleichsweise viel Energie bei, verglichen mit dem CRM-Modus, höherer Spannung können insbesondere Aktoren betrieben werden, wobei dies üblicherweise auf Basis von zuvor in der CRM-Phase von dem Master an die Slaves übertragenen Steuerbefehlen erfolgt. Der PDCM-Modus findet gemäß Power Function Class keine Anwendung, da er bei den genannten Aktoren aufgrund des geringen Datenaufkommens auch nicht erforderlich ist.

Der DSI3 Bus Standard erlaubt es unter anderem, die Zentraleinheit und die Sensoreinheiten in Serie miteinander zu verbinden, also in einer sogenannten "Daisy Chain"-Konfiguration. Je nach ihrer Stellung in dieser Serienanordnung werden die Sensoreinheiten dabei mit einer Adresse versehen. Bei einer Anzahl von N Sensoreinheiten lauten diese jeweiligen Adressen der Sensoreinheiten typischerweise 1 bis N, wobei einander benachbarte Sensoreinheiten Adressen haben, die sich genau um 1 unterscheiden. Zur Verteilung solcher Adressen an die Sensoreinheiten ist in dem DSI3 Bus Standard ein Verfahren definiert, das mit "Discovery Mode" bezeichnet ist. Dazu weisen die Sensoreinheiten in der Regel einen seriell zur Zweidraht-Busleitung angeordneten Prüfwiderstand und eine Last auf, die mit der Zweidraht-Busleitung verbunden werden kann. Bei dieser Last handelt es sich im Discovery Mode um die Last, die auch bei der Kommunikation mit der Zentraleinheit mit der Zweidraht-Busleitung verbunden wird, also um die Kommunikationslast. Bei mit der Zweidraht-Busleitung verbundenen Kommunikationslasten kommt es in allen Prüfwiderständen zu einem Stromfluss außer in der letzten Sensoreinheit der Kette, hinter der sich eben keine Kommunikationslast mehr befindet. Auf diese Weise kann im Discovery Mode immer die jeweils letzte Sensoreinheit in der Kette ermittelt werden, so dass durch Abschalten der Kommunikationslast der jeweils letzten Sensoreinheit und sukzessives Hochzählen der Adressen in den Sensoreinheiten eine Adressvergabe an die Sensoreinheiten erfolgen kann, bis schließlich alle Sensoreinheiten eine Adresse erhalten haben.

Im Power Function Class-Betrieb, insbesondere bei längeren Ketten von Sensoreinheiten, muss der Innenwiderstand der Sensoreinheiten gering gehalten werden, um hohe Spannungsabfälle und damit hohe Verlustleistungen in den Sensoreinheiten zu vermeiden. Aufgrund der niedrigen Innenwiderstände kann die Messung des Spannungsabfalls während des Discovery Mode zu falschen Ergebnissen führen, da die zu messenden Spannungen sich im Bereich des Rauschen befinden können. Daher arbeitet der in der DSl3-Spezifikation definierte Discovery Mode bei einer Sensoreinheit in Daisy Chain-Konfiguration im Power Function Class-Betrieb nicht immer zuverlässig.

In der WO 2016/054345 A1 ist ein Ultraschallsystem zum Überwachen des Zustands oder der Integrität einer Struktur, wie z. B. in der Öl-, Gas- oder Energieerzeugungswirtschaft genutzt, beschrieben. Das System umfasst eine Mehrzahl von Ultraschallsensoren und wenigsten ein Digital Sensor Interface.

Die DE 10 2013 226 376 A1 beschreibt ein Verfahren zum Betreiben eines Sensorsystem mit einem Ultraschallsensor und einem Steuergerät, wobei Daten von dem Ultraschallsensor an das Steuergerät strommoduliert und Daten von dem Steuergerät zum Ultraschallsensor spannungsmoduliert übertragen werden. Durch diese Lösung können nach Modifikation einer entsprechenden PSl5-Datenbus-Schnittstelle eben dieser Datenbus und ein LIN-Datenbus zur Datenübertragung zur Ausnutzung der Vorteile der beiden Bussystem miteinander kombiniert werden.

In der DE 10 2012 103 907 A1 ist ein Verfahren zum Betrieb einer Empfangseinheit eines mit einer Sendeeinheit verbundenen Kraftfahrzeugsteuergeräts beschrieben. Die Empfangseinheit fügt dem empfangenen Signal eine Kennung hinzu, welche eine virtuelle Adresse der Sendeeinheit enthält. Dies kann verwendet werden, um eine Sensoreinheit nach dem PSI5-Version1-Standard an ein Kraftfahrzeugsteuergerät anzuschließen, das Signale im PSl-Version2-Standard verarbeitet.

Die EP 2 263 102 B1 beschreibt schließlich ein ultraschallbasiertes Fahrerassistenzsystem mit mehreren Sensoren. Die Sensoren sind jeweils mit einem individuellen Identifikationscode belegt, der über eine Schnittstelle von einem Steuergerät auslesbar ist. Die Schnittstelle ist eine 2-Draht-Bussschnittstelle, die nach einer Periphere Sensor Schnittstelle (Peripheral Sensor Interface PSI) ausgebildet ist.

Es ist die Aufgabe der Erfindung, Verfahren anzugeben, mit dem an die Sensoreinheiten einer für ein Kraftfahrzeug vorgesehenen Sensoranordnung auf Basis eines DSI-Protokolls auch in einem Power Function Class-Betrieb auf robuste und verlässliche Weise Adressen verteilt werden können.

Diese Aufgabe wird durch die Gegenstände der unabhängigen Patentansprüche gelöst. Bevorzugte Weiterbildungen der Erfindungen sind in den Unteransprüchen beschrieben.

Erfindungsgemäß wird somit ein Verfahren zum Betreiben einer Sensoranordnung in einem Kraftfahrzeug auf Basis eines DSI-Protokolls in einem Power Function Class-Betrieb bereitgestellt, wobei
- die Sensoranordnung eine Zentraleinheit als Master und eine Mehrzahl von Sensoreinheiten als von dem Master gesteuerte Slaves aufweist,
- die Zentraleinheit und die Sensoreinheiten mittels einer Zweidraht-Busleitung in Serie miteinander verbunden sind,
- die Sensoreinheiten jeweils einen mit der Zweidraht-Busleitung in Serie geschalteten Prüfwiderstand, eine mit der Zweidraht-Busleitung verbindbare elektrische Prüflast und einen Adresszähler aufweisen und
- wenigstens drei verschiedene Betriebsphasen vorgesehen sind in Form von einander abwechselnden Kommunikationsphasen einerseits und Energieversorgungsphasen andererseits und einer den Kommunikationsphasen und den Energieversorgungsphasen vorausgehenden Adressvergabephase, mit folgenden Schritten:
- Übertragen von Informationen zwischen der Zentraleinheit und den Sensoreinheiten mittels einer vorbestimmten unteren Spannung und einer vorbestimmten oberen Spannung als jeweiliger Busspannung in den Kommunikationsphasen,
- Versorgen der Sensoreinheiten mit elektrischer Energie durch die Zentraleinheit in den Energieversorgungsphasen, in denen als Busspannung eine Leerlaufspannung anliegt, die wenigstens 1 V größer ist als die obere Spannung,
- Zuweisen einer jeweiligen Adresse an die einzelnen Sensoreinheiten in der Adressvergabephase mittels der nachfolgenden Schritte a) bis f):
   a) Speichern einer ersten Adresse in den Adresszählern aller Sensoreinheiten, wobei die erste Adresse für alle Sensoreinheiten gleich ist,
   b) Anlegen einer Adressvergabespannung als Busspannung, die wenigstens 1 V größer ist als die obere Spannung,
   c) Verbinden der elektrischen Prüflasten aller Sensoreinheiten mit der Zweidraht-Busleitung, so dass von den Sensoreinheiten jeweils ein Prüfstrom gezogen wird,
   d) Erfassen des durch die Prüfwiderstände jeweils fließenden Stroms,
   e) dauerhaftes Trennen der elektrischen Prüflast von der Zweidraht-Busleitung in der Sensoreinheit, in der kein durch den Prüfwiderstand fließender Strom erfasst worden ist, und Erhöhen der jeweiligen Adresse um einen vorbestimmten für alle Sensoreinheiten gleichen Wert in den Adresszählern aller anderen Sensoreinheiten, deren Prüflast noch nicht dauerhaft von der Zweidraht-Busleitung getrennt worden ist,
   f) Wiederholen der Schritte d) und e) für alle Sensoreinheiten, deren Prüflast noch nicht dauerhaft von der Zweidraht-Busleitung getrennt worden ist, bis in allen Sensoreinheiten die elektrische Prüflast dauerhaft von der Zweidraht-Busleitung getrennt worden ist.

Es ist somit ein maßgeblicher Aspekt der Erfindung, dass in der Adressvergabephase, in der den Sensoreinheiten ihre jeweilige Adresse zugewiesen wird, mit einer Adressvergabespannung als Busspannung gearbeitet wird, die wenigstens 1 V größer ist als die obere Spannung, die zum Austausch von Informationen zwischen der Zentraleinheit und den Sensoreinheiten in den Kommunikationsphasen verwendet wird. Wie beim regulären Discovery Mode erfolgt im Übrigen das Erkennen der jeweils letzten Sensoreinheit und das sukzessive Hochzählen der Adressen in den Sensoreinheiten in mehreren aufeinanderfolgenden Zyklen.

Wenn es vorliegend heißt, dass ein dauerhaftes Trennen der elektrischen Prüflast von der Zweidraht-Busleitung in der Sensoreinheit vorgesehen ist, in der kein durch den Prüfwiderstand fließender Strom erfasst worden ist, so ist mit "dauerhaft" gemeint "in dieser Adressvergabephase". In einer späteren Adressvergabephase, wenn die Adressen der Sensoreinheiten wieder neu zugeordnet werden, kann die elektrische Prüflast selbstverständliche wieder mit der Zweidraht-Busleitung verbunden werden.

Dabei muss die Adressvergabespannung nicht konstant und immer gleich sein. Vielmehr kann sie variieren und kurzzeitig auch unter die genannte Untergrenze fallen. Vorzugsweise bleibt die Adressvergabespannung jedoch dauerhaft über der Untergrenze von 1 V über der oberen Spannung für die Kommunikationsphase.

Vorzugsweise sind die Sensoreinheiten jeweils Aktoren mit einer jeweiligen Aktorlast und weisen jeweils eine an die Zweidraht-Busleitung zu Kommunikationszwecken anschaltbare Kommunikationslast auf, wobei die jeweilige Aktorlast größer als die jeweilige Kommunikationslast ist und die Aktorlasten als Prüflasten verwendet werden. Auf diese Weise wird der durch die jeweiligen Prüfwiderstände fließende Strom erhöht, was die Detektierbarkeit der Stellung der jeweiligen Sensoreinheit in der Kette weiter verbessert.

Gemäß einer bevorzugten Weiterbildung der Erfindung ist dabei folgender Schritt vorgesehen:
- Anlegen einer Adressvergabespannung als Busspannung, die wenigstens 1 V größer ist als die obere Spannung und wenigstens 50 % der Leerlaufspannung, vorzugsweise wenigstens 90 % der Leerlaufspannung beträgt. Gemäß dieser bevorzugten Weiterbildung der Erfindung wird die Adressvergabespannung also möglichst groß gewählt, um einen durch die Prüfwiderstände fließenden Strom möglichst gut detektieren zu können.

Dazu kann vorzugsweise auch der folgende Schritt vorgesehen sein:
- Anlegen einer Adressvergabespannung als Busspannung, die wenigstens zeitweise der Leerlaufspannung entspricht. Hier wird also mit der Spannung als Adressvergabespannung gearbeitet, die - wenigstens zeitweise - gerade der Spannung entspricht, die in den Energieversorgungsphasen zur Versorgung der Sensoreinheiten mit elektrischer Energie als Busspannung anliegt.

Ganz besonders bevorzugt gilt außerdem, dass folgender Schritt vorgesehen ist:
- Anlegen einer Adressvergabespannung als Busspannung, die wenigstens zeitweise 25 V beträgt. Hier gilt also, dass unabhängig davon, ob als Leerlaufspannung tatsächlich die maximal zulässige Spannung als Busspannung anliegt, jedenfalls als Adressvergabespannung mit der maximal zulässigen Spannung gearbeitet wird.

Vorzugsweise ist weiterhin vorgesehen, dass für Schritt d) ab der ersten Wiederholung dieses Schritts gilt:
d) Trennen der elektrischen Prüflast von der Zweidraht-Busleitung in allen Sensoreinheiten, deren elektrische Prüflast noch nicht dauerhaft abgeschaltet worden ist, und nachfolgend wieder Verbinden der elektrischen Prüflast mit der Zweidraht-Busleitung in allen Sensoreinheiten, deren Prüflast noch nicht dauerhaft von der Zweidraht-Busleitung getrennt worden ist, so dass von diesen Sensoreinheiten jeweils ein Prüfstrom gezogen wird, und Erfassen des durch die Prüfwiderstände dieser Sensoreinheiten jeweils fließenden Stroms.

Gemäß dieser bevorzugten Weiterbildung der Erfindung werden die Prüflasten nach Beenden eines Zyklus und für den nächsten Zyklus von der Zweidraht-Busleitung vollständig getrennt und dann wieder angeschaltet. Dabei gilt vorzugsweise, dass das Verbinden der elektrischen Prüflasten der Sensoreinheiten mit der Zweidraht-Busleitung in den Schritten c) und d) stufenweise mit wenigstens zwei Stufen derart erfolgt, dass in der ersten Stufe erst ein Teil der Prüflast aktiviert wird und danach in der nachfolgenden Stufe bzw. in den nachfolgenden Stufen die Prüflast jeweils graduell erhöht wird. Ganz besonders ist dabei vorzugsweise vorgesehen, dass in den Sensoreinheiten jeweils in einer nachfolgenden Stufe keine Erhöhung der Prüflast mehr erfolgt, wenn in der vorherigen Stufe ein durch den Prüfwiderstand der jeweiligen Sensoreinheit fließender Strom erfasst worden ist, der einen vorbestimmten Schwellwert überstiegen hat. Auf diese Weise kann eine Überlastung der Zentraleinheit vermieden werden, da bereits aufgrund des Fließens eines geringeren Stroms verlässlich festgestellt worden ist, dass diese Sensoreinheit nicht die letzte in der Kette ist.

Grundsätzlich ist die Adressvergabe frei, und es können beliebige Adressen vergeben werden, die eine eindeutige Identifizierung der jeweiligen Sensoreinheiten gewährleisten. Vorzugsweise ist die erste Adresse jedoch 1, und bei den Erhöhungen von Adressen erfolgt jeweils eine Erhöhung um 1. Auf diese Weise kommt man zu den Adressen 1, 2, ... N bei einer Anzahl von N Sensoreinheiten.

Ähnlich wie beim regulären Discovery Mode wird die Adressvergabe an die Sensoreinheiten vorzugsweise von der Zentraleinheit durch ein Spannungssignal mit einem vorbestimmten Spannungswert, wie V_{LOW-PWR} mit einem Wert von 2 V, und einer vorbestimmten Dauer, wie 24 µs, eingeleitet. Danach ist vorzugsweise, ebenfalls ähnlich wie beim regulären Discovery Mode, vor dem Beginn der einzelnen Zyklen, in denen die jeweils letzte Sensoreinheit in der Kette erkannt wird, eine Verzögerungszeit vorgesehen, um den Einfluss von sich ggf. einstellenden Ladeströmen auf die Adressvergabe zu vermeiden.

Gemäß einer bevorzugten Weiterbildung der Erfindung handelt es sich bei den Sensoreinheiten um Ultraschallsensoreinheiten zum Senden und/oder Empfangen von Ultraschallsignalen.

Die Erfindung betrifft auch die Verwendung eines Verfahrens, wie zuvor beschrieben, in einem Kraftfahrzeug sowie ein nichtflüchtiges, computerlesbares Speichermedium mit darauf abgespeicherten Befehlen, die bei ihrer Ausführung auf einem Prozessor ein Verfahren, wie zuvor beschrieben, bewirken. Weiterhin betrifft die Erfindung eine Sensoranordnung, die zum Betrieb mittels eines Verfahrens, wie zuvor beschrieben, eingerichtet ist.

Nachfolgend wird die Erfindung unter Bezugnahme auf die Zeichnungen anhand bevorzugter Ausführungsbeispiele näher erläutert. Die dargestellten Merkmale können sowohl jeweils einzeln als auch in Kombination einen Aspekt der Erfindung darstellen.

Es zeigen
- Fig. 1: schematisch eine Sensoranordnung mit einer Zentraleinheit und Mehrzahl von Sensoreinheiten in einem Kraftfahrzeug gemäß einem bevorzugten Ausführungsbeispiel der Erfindung,
- Fig. 2: schematisch den Ablauf der Adressvergabe an die Sensoreinheiten einer Sensoranordnung gemäß einem bevorzugten Ausführungsbeispiel der Erfindung und
- Fig. 3: schematisch den Ablauf der Adressvergabe an die Sensoreinheiten einer Sensoranordnung gemäß einem anderen bevorzugten Ausführungsbeispiel der Erfindung.

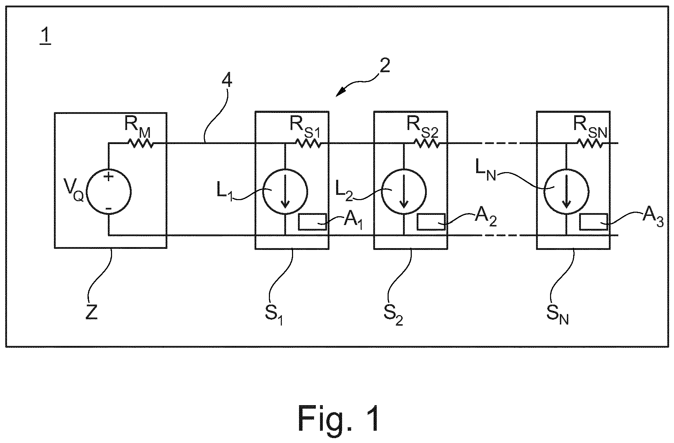

Aus Fig. 1 ist schematisch ein Fahrzeug 1 mit einer Sensoranordnung 2 gemäß einem bevorzugt Ausführungsbeispiel der Erfindung gezeigt. Die Sensoranordnung 2 weist eine Zentraleinheit Z und eine Anzahl N von Sensoreinheiten S₁, S₂, ..., S_{N} auf. Die Zentraleinheit Z und die Sensoreinheiten S₁, S₂, ..., S_{N} sind mittels einer Zweidraht-Busleitung 4 miteinander verbunden. Dabei gilt weiterhin, dass die Sensoreinheiten S₁, S₂, ..., S_{N} mit der Zentraleinheit Z in Serie miteinander verbunden sind, also in einer sogenannten Daisy Chain-Konfiguration.

Die Zentraleinheit Z stellt im Sinne der oben genannten DSI3-Spezifikation einen Master dar, der über die Zweidraht-Busleitung 4 mit den im Sinne der DSl3-Spezifikation als Slaves fungierenden Sensoreinheiten S₁, S₂, ..., S_{N} verbunden ist, so dass insgesamt ein Bus im Sinne der DSl3-Spezifikation vorliegt. Des Weiteren handelt es sich bei den Sensoreinheiten S₁, S₂, ..., S_{N} vorliegend um Sensoreinheiten mit Aktoren, die einen vergleichsweise hohen Energiebedarf haben, so dass der Betrieb dieser Sensoranordnung 2 unter die oben genannte Power Function Class fällt. Wie eingangs schon erläutert, finden somit im Betrieb der vorliegenden Sensoranordnung 2 der Power Function Class im Wechsel einerseits Energieversorgungsphasen und andererseits Kommunikationsphasen statt.

In den Kommunikationsphasen erfolgt ein Übertragen von Informationen zwischen der Zentraleinheit Z und den Sensoreinheiten S₁, S₂, ..., S_{N} mittels einer unteren Spannung V_{LOW-PWR} von 2 V und einer oberen Spannung V_{HIGH}-_{PWR} von 4 V als jeweiliger Busspannung, während in den Energieversorgungsphasen ein Versorgen der Sensoreinheiten S₁, S₂, ..., S_{N} mit elektrischer Energie durch die Zentraleinheit Z erfolgt. In diesen Energieversorgungsphasen liegt als Busspannung U_{Bus} eine Leerlaufspannung V_{IDLE} an, die wenigstens 1 V größer ist als die obere Spannung V_{HIGH-PWR}. Vorliegend wird mit einer Leerlaufspannung gearbeitet, die bei der maximal zulässigen Spannung von 25 V liegt oder nur wenig darunter.

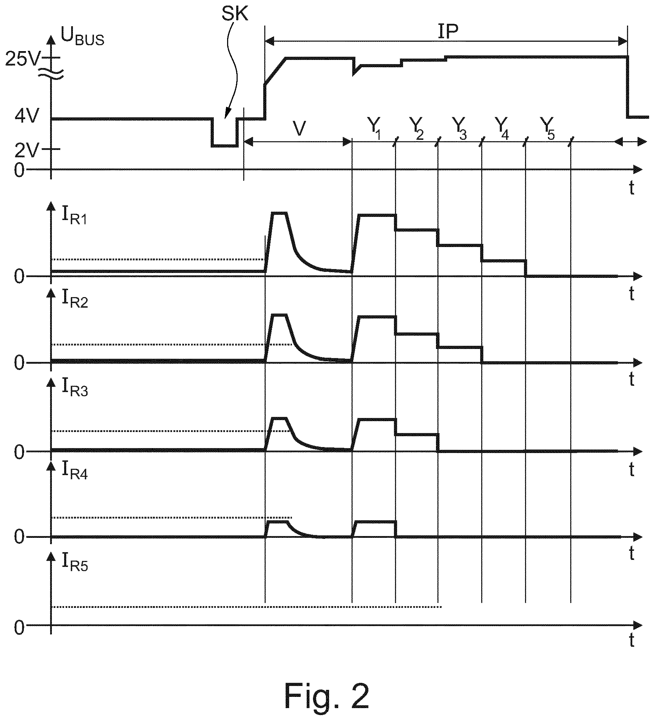

Bevor jedoch mit den Kommunikationsphasen begonnen werden kann, müssen den Sensoreinheiten S₁, S₂, ..., S_{N} Adressen zugewiesen werden. Dazu weisen die Sensoreinheiten S₁, S₂, ..., S_{N} jeweils einen Adresszähler A₁, A₂, ..., A_{N} auf, in dem die jeweilige Adresse abgespeichert werden kann. Gemäß einem ersten Ausführungsbeispiel der Erfindung ist dazu Folgendes vorgesehen:
Die Sensoranordnung 2 gemäß dem ersten Ausführungsbeispiel der Erfindung weist entsprechen der Darstellung in Fig. 1 und einer Zentraleinheit Z eine Anzahl von N = 5 Sensoreinheiten S₁, S₂, ..., S_{N} auf mit jeweils einem in Serie mit der Zweidraht-Busleitung 4 geschaltetem Prüfwiderstand R_{S1}, R_{S2}, ..., R_{SN}, jeweils einer mit der Zweidraht-Busleitung 4 verbindbaren Prüflast L_{1;} L₂, ...., L_{N} und jeweils einem zuvor schon angesprochenen Adresszähler A₁, A₂, ..., A_{N} Der Ablauf der Adressvergabe ist schematisch in Fig. 2 dargestellt.

Fig. 2 zeigt, jeweils in Abhängigkeit von der Zeit t, ganz oben den Verlauf der Busspannung U_{Bus} und darunter den jeweiligen Strom I_{R1}, I_{R2}, I_{R3}, I_{R4}, I_{R5} durch die Prüfwiederstände R_{S1}, R_{S2}, ..., R_{SN}. Eingeleitet wird das Verfahren der Adressvergabe, also die Adressvergabephase IP, mittels eines Startkommandos SK, während dem die Busspannung für eine Zeitdauer von 24 µs von 4 V auf 2 V abgesenkt wird. Danach erfolgt eine zeitliche Verzögerung V vor den einzelnen Zyklen Y₁, Y₂, Y₃, Y₄, Y₅, in denen die Sensoreinheiten ihre relative Stellung in ihrer Kette prüfen, um den Einfluss von sich ggf. einstellenden Ladeströmen auf die Adressvergabe zu vermeiden. Während der zeitlichen Verzögerung V wird die Busspannung U_{Bus} also schon auf die Adressvergabespannung von vorliegend 25 V oder annährend 25 V erhöht; es erfolgt jedoch noch kein Verbinden der Prüflasten L_{1;} L₂, ...., L_{N} mit der Zweidraht-Busleitung 4.

Dann folgt der erste Zyklus Y₁ der Adressvergabephase IP, in der alle Sensoreinheiten S₁, S₂, ..., S_{N} ihre Prüflasten L_{1,} L₂, ...., L_{N} mit der Zweidraht-Busleitung 4 verbinden. Aufgrund der Prüflasten L_{1;} L₂, ...., L_{N}, die sich in der Kette der Sensoreinheiten S₁, S₂, ..., S_{N} jeweils hinter einer jeweiligen Sensoreinheit S₁, S₂, ..., S_{N-1} befinden fließt durch die Prüfwiederstände R_{S1}, R_{S2}, ..., R_{SN-1} jeweils ein Strom I_{R1}, I_{R2}, ..., I_{RN-1}, der umso größer ist, je mehr Sensoreinheiten S₁, S₂, ..., S_{N} hinter einer jeweiligen Sensoreinheit S₁, S₂, ..., S_{N-1} noch angeordnet sind. Nur durch den Prüfwiderstand R_{SN} in der letzten Sensoreinheit S_{N} in der Kette der Sensoreinheiten S₁, S₂, ..., S_{N} fließt kein Strom, was daher rührt, dass sich hinter dieser letzten Sensoreinheit S_{N} keine weitere Sensoreinheit mit einer Prüflast mehr befindet, so dass auch kein Strom gezogen wird.

Diese letzte Sensoreinheit S_{N} erhält die Adresse 1 und nimmt an dem weiteren Verfahren der Adressvergabe nicht mehr teil. Alle anderen Sensoreinheiten S₁, S₂, ..., S_{N-1} erhöhen ihre Adresse um 1. Insbesondere wird die Prüflast der Sensoreinheit S_{N} mit der Adresse 1 für die nachfolgenden Zyklen dauerhaft von der Zweidraht-Busleitung 4 getrennt, so dass insofern diejenige Sensoreinheit S_{N-1} zur "letzten" Sensoreinheit in der Kette wird, die unmittelbar vor der Sensoreinheit S_{N} mit der Adresse 1 angeordnet ist. Dieses Verfahren wird so lange wiederholt, bis alle Sensoreinheiten S₁, S₂, ..., S_{N} mit einer Adresse versehen sind, also auch der Strom I_{R1} gleich Null geworden ist, da dann die Sensoreinheit S₁ zur "letzten" Sensoreinheit in der Kette geworden ist. Danach können die Kommunikationsphasen und Energieversorgungsphasen beginnen.

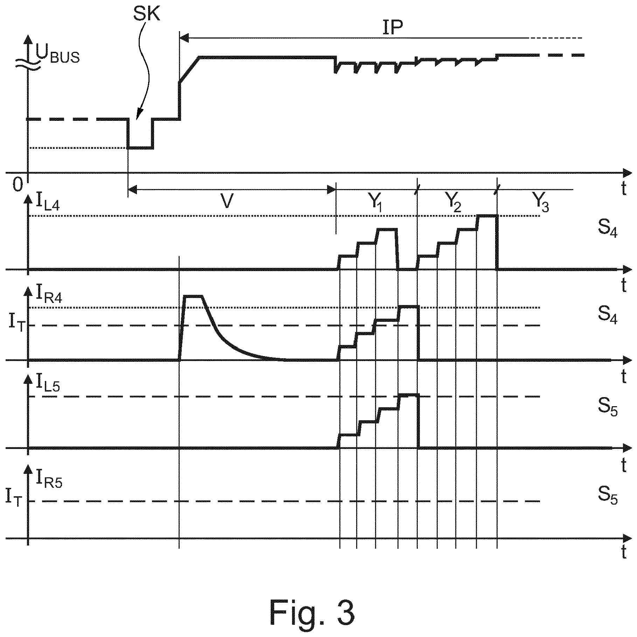

Bei dem zuvor beschriebenen bevorzugten Ausführungsbeispiel der Erfindung ist jeweils immer direkt die gesamt Prüflast L₁, L₂, ...., L_{N} aktiviert worden; es ist also immer sofort der gesamte maximale Strom aufgrund dieser Prüflasten L₁, L₂, ...., L_{N} geflossen. Dies kann jedoch dazu führen, dass die Zentraleinheit Z überlastet wird. Um dies zu vermeiden, erfolgt gemäß einem anderen bevorzugten Ausführungsbeispiel der Erfindung, wie in Fig. 3, für die Sensoreinheiten S₄ und S₅ exemplarisch dargestellt, in jedem Zyklus Y₁, Y₂, Y₃ das Verbinden der elektrischen Prüflasten L₁, L₂, ...., L_{N} der Sensoreinheiten S₁, S₂, ..., S_{N-1} mit der Zweidraht-Busleitung 4 stufenweise mit vorliegend insgesamt maximal vier Stufen derart, dass in der ersten Stufe erst ein Teil der Prüflast L, L₂, ...., L_{N} L_{1,} L₂, ...., L_{N} aktiviert wird, nämlich ein Viertel der maximalen Prüflast L_{1,} L₂, ...., L_{N}, und danach in den nachfolgenden Stufen die Prüflast L_{1,} L₂, ...., L_{N} jeweils graduell erhöht wird, nämlich auf zwei Viertel, drei Viertel der Prüflast L_{1,} L₂, ...., L_{N} und schließlich auf die gesamte Prüflast L₁, L₂, ...., L_{N}. Dabei erfolgt in den Sensoreinheiten S₁, S₂, ..., S_{N-1} jeweils in einer nachfolgenden Stufe keine Erhöhung der Prüflast L_{1,} L₂, ...., L_{N-1} mehr, wenn in der vorherigen Stufe ein durch den Prüfwiderstand R_{S1}, R_{S2}, ..., R_{SN-1} der jeweiligen Sensoreinheit S₁, S₂, ..., S_{N-1} fließender Strom I_{R1}, I_{R2}, ..., I_{RN-1} erfasst worden ist, der einen vorbestimmten Schwellwert I_{T} überstiegen hat. Vorliegend beträgt der Schwellwert I_{T} 60 % des von einer einzelner Prüflast verursachten Stroms.

In Fig. 3 ist jeweils in Abhängigkeit von der Zeit t ganz oben die Busspannung U_{Bus} dargestellt und darunter der Strom I_{L4} aufgrund der Prüflast L₄, der Strom I_{R4} über den Prüfwiderstand R₄ in der Sensoreinheit S₄, der Strom I_{L5} aufgrund der Prüflast L₅ und der Strom I_{R5} über den Prüfwiderstand R₅ in der Sensoreinheit S₅. Für die Sensoreinheit S₅ ist keine Strom I_{R5} über den Prüfwiderstand R₅ erfasst worden, da die Sensoreinheit S₅ die letzte Sensoreinheit in der Kette ist. Für die Sensoreinheit S₄ ist der Schwellwert I_{T} von 60 % des maximal möglichen Stroms bereits in der dritten Stufe überschritten worden, so dass keine Erhöhung der Prüflast L₄ in der vierten Stufe mehr erfolgt. Die Sensoreinheit S₄ "weiß" nämlich schon aufgrund des hinreichend hohen den Schwellwert I_{T} übersteigenden Strom I_{R4}, dass sie nicht die letzte Sensoreinheit in der Kette ist.

### Bezugszeichenliste

- 1: Kraftfahrzeug
- 2: Sensoranordnung
- 4: Busleitung
- I_{R1}, I_{R2}, ..., I_{R5}: Strom durch die Prüfwiderstände
- I_{T}: Schwellwert für den Strom durch die Prüfwiderstände
- IP: Adressvergabephase
- L₁, L₂, ...., L_{N}: Prüflast
- R_{S1}, R_{S2}, ..., R_{SN}: Prüfwiderstände
- S₁, S₂, ..., S_{N}: Sensoreinheiten
- SK: Startkommando
- U_{Bus}: Busspannung
- V: zeitliche Verzögerung
- V_{HIGH}-_{PWR}: obere Spannung
- V_{LOW-PWR}: untere Spannung
- V_{IDLE}: Leerlaufspannung
- Y₁, Y₂, ..., Y₅: Zyklen der Adressvergabephase
- Z: Zentraleinheit

## Patentansprüche

1. Verfahren zum Betreiben einer Sensoranordnung (2) in einem Kraftfahrzeug (1) auf Basis eines DSI-Protokolls in einem Power Function Class-Betrieb, wobei
- die Sensoranordnung (2) eine Zentraleinheit (3) als Master und eine Mehrzahl von Sensoreinheiten (S₁, S₂, ..., S_{N}) als von dem Master gesteuerte Slaves aufweist,
- die Zentraleinheit (3) und die Sensoreinheiten (S₁, S₂, ..., S_{N}) mittels einer Zweidraht-Busleitung (4) in Serie miteinander verbunden sind,
- die Sensoreinheiten (S₁, S₂, ..., S_{N}) jeweils einen mit der Zweidraht-Busleitung (4) in Serie geschalteten Prüfwiderstand (R_{S1}, R_{S2}, ..., R_{SN}), eine mit der Zweidraht-Busleitung verbindbare elektrische Prüflast (L₁, L₂, ...., L_{N}) und einen Adresszähler (A₁, A₂, ..., A_{N}) aufweisen und
- wenigstens drei verschiedene Betriebsphasen vorgesehen sind in Form von einander abwechselnden Kommunikationsphasen einerseits und Energieversorgungsphasen andererseits und einer den Kommunikationsphasen und den Energieversorgungsphasen vorausgehenden Adressvergabephase (IP), mit folgenden Schritten:
- Übertragen von Informationen zwischen der Zentraleinheit (Z) und den Sensoreinheiten (S₁, S₂, ..., S_{N}) mittels einer vorbestimmten unteren Spannung (V_{LOW-PWR}) und einer vorbestimmten oberen Spannung (V_{HIGH-PWR}) als jeweiliger Busspannung (U_{Bus}) in den Kommunikationsphasen,
- Versorgen der Sensoreinheiten (S₁, S₂, ..., S_{N}) mit elektrischer Energie durch die Zentraleinheit (Z) in den Energieversorgungsphasen, in denen als Busspannung (U_{Bus}) eine Leerlaufspannung (V_{IDLE}) anliegt, die wenigstens 1 V größer ist als die obere Spannung (V_{HIGH-PWR}),
- Zuweisen einer jeweiligen Adresse an die einzelnen Sensoreinheiten (S₁, S₂, ..., S_{N}) in der Adressvergabephase mittels der nachfolgenden Schritte a) bis f):
a) Speichern einer ersten Adresse in den Adresszählern (A₁, A₂, ..., A_{N}) aller Sensoreinheiten (S₁, S₂, ..., S_{N}), wobei die erste Adresse für alle Sensoreinheiten (S₁, S₂, ..., S_{N}) gleich ist,
b) Anlegen einer Adressvergabespannung als Busspannung (U_{Bus}), die wenigstens 1 V größer ist als die obere Spannung (V_{HIGH-PWR}),
c) Verbinden der elektrischen Prüflasten (S₁, S₂, ..., S_{N}) aller Sensoreinheiten (S₁, S₂, ..., S_{N}) mit der Zweidraht-Busleitung (4), so dass von den Sensoreinheiten (S₁, S₂, ..., S_{N}) jeweils ein Prüfstrom (IL₁, I_{L2}, ... I_{LN}) gezogen wird,
d) Erfassen des durch die Prüfwiderstände (R_{S1}, R_{S2}, ..., R_{SN}) jeweils fließenden Stroms (I_{R1}, I_{R2}, ..., I_{R5}),
e) dauerhaftes Trennen der elektrischen Prüflast (L₁, L₂, ...., L_{N}) von der Zweidraht-Busleitung (4) in der Sensoreinheit (S₁, S₂, ..., S_{N}), in der kein durch den Prüfwiderstand (R_{S1}, R_{S2}, ..., R_{SN}) fließender Strom (I_{R1}, I_{R2}, ..., I_{R5}) erfasst worden ist, und Erhöhen der jeweiligen Adresse um einen vorbestimmten für alle Sensoreinheiten (S₁, S₂, ..., S_{N}) gleichen Wert in den Adresszählern (A₁, A₂, ..., A_{N-1}) aller anderen Sensoreinheiten (S₁, S₂, ..., S_{N-1}), deren Prüflast (L₁, L₂, ..., L_{N-1}) noch nicht dauerhaft von der Zweidraht-Busleitung (4) getrennt worden ist,
f) Wiederholen der Schritte d) und e) für alle Sensoreinheiten (S₁, S₂, ..., S_{N-1}), deren Prüflast (L₁, L₂, ..., L_{N-1}) noch nicht dauerhaft von der Zweidraht-Busleitung (4) getrennt worden ist, bis in allen Sensoreinheiten (S₁, S₂, ..., S_{N}) die elektrische Prüflast (L₁, L₂, ...., L_{N}) dauerhaft von der Zweidraht-Busleitung (4) getrennt worden ist.

2. Verfahren nach Anspruch 1, wobei die Sensoreinheiten (S₁, S₂, ..., S_{N}) jeweils Aktoren mit einer jeweiligen Aktorlast sind und jeweils eine an die Zweidraht-Busleitung (4) zu Kommunikationszwecken anschaltbare Kommunikationslast aufweisen, wobei die jeweilige Aktorlast größer als die jeweilige Kommunikationslast ist und die Aktorlasten als Prüflasten (L₁, L₂, ...., L_{N}) verwendet werden.

3. Verfahren nach Anspruch 1 oder 2, mit dem Schritt:
- Anlegen einer Adressvergabespannung als Busspannung, die wenigstens 1 V größer ist als die obere Spannung und wenigstens 50 % der Leerlaufspannung beträgt.

4. Verfahren nach Anspruch 3, mit dem Schritt:
- Anlegen einer Adressvergabespannung als Busspannung (U_{Bus}), die wenigstens zeitweise der Leerlaufspannung (V_{IDLE}) entspricht.

5. Verfahren nach Anspruch 3, mit dem Schritt:
- Anlegen einer Adressvergabespannung als Busspannung (U_{Bus}), die wenigstens zeitweise 25 V beträgt.

6. Verfahren nach einem der vorherigen Ansprüche, wobei für Schritt d) ab der ersten Wiederholung dieses Schritts gilt:
d) Trennen der elektrischen Prüflast (L₁, L₂, ...., L_{N})) von der Zweidraht-Busleitung (4) in allen Sensoreinheiten (S₁, S₂, ..., S_{N-1}), deren elektrische Prüflast (L₁, L₂, ...., L_{N-1}) noch nicht dauerhaft abgeschaltet worden ist, und nachfolgend wieder Verbinden der elektrischen Prüflast (L₁, L₂, ...., L_{N-1}) mit der Zweidraht-Busleitung (4) in allen Sensoreinheiten (S₁, S₂, ..., S_{N-1}), deren Prüflast (L₁, L₂, ...., L_{N-1}) noch nicht dauerhaft von der Zweidraht-Busleitung (4) getrennt worden ist, so dass von diesen Sensoreinheiten (S₁, S₂, ..., S_{N-1}) jeweils ein Prüfstrom (I_{L1}, I_{L2}, ... I_{LN-1}) gezogen wird, und Erfassen des durch die Prüfwiderstände (R_{S1}, R_{S2}, ..., R_{SN-1}) dieser Sensoreinheiten (S₁, S₂, ..., S_{N-1}) jeweils fließenden Stroms.

7. Verfahren nach Anspruch 5, wobei das Verbinden der elektrischen Prüflasten (L₁, L₂, ...., L_{N}) der Sensoreinheiten (S₁, S₂, ..., S_{N}) mit der Zweidraht-Busleitung (4) in den Schritten c) und d) stufenweise mit wenigstens zwei Stufen derart erfolgt, dass in der ersten Stufe erst ein Teil der Prüflast (S₁, S₂, ..., S_{N}) aktiviert wird und danach in der nachfolgenden Stufe bzw. in den nachfolgenden Stufen die Prüflast (L₁, L₂, ...., L_{N}) jeweils weiter graduell erhöht wird.

8. Verfahren nach Anspruch 6, wobei in den Sensoreinheiten (S₁, S₂, ..., S_{N}) jeweils in einer nachfolgenden Stufe keine Erhöhung der Prüflast (L₁, L₂, ...., L_{N}) mehr erfolgt, wenn in der vorherigen Stufe ein durch den Prüfwiderstand (R_{S1}, R_{S2}, ..., R_{SN}) der jeweiligen Sensoreinheit (S₁, S₂, ..., S_{N}) fließender Strom (I_{R1}, I_{R2}, ..., I_{R5}) erfasst worden ist, der einen vorbestimmten Schwellwert (I_{T}) überstiegen hat.

9. Verfahren nach einem der vorhergehenden Ansprüche, wobei die erste Adresse 1 ist und bei den Erhöhungen von Adressen jeweils eine Erhöhung um 1 erfolgt.

10. Verwendung eines Verfahrens nach einem der vorhergehenden Ansprüche in einem Kraftfahrzeug (1).

11. Nichtflüchtiges, computerlesbares Speichermedium mit darauf abgespeicherten Befehlen, die bei ihrer Ausführung auf einem Prozessor ein Verfahren nach einem der Ansprüche 1 bis 9 bewirken.

12. Sensoranordnung, die zum Betrieb mittels eines Verfahrens nach einem der Ansprüche 1 bis 9 eingerichtet ist.

13. Sensoranordnung nach Anspruch 12, die als Sensoreinheiten (S₁, S₂, ..., S_{N}) Ultraschallsensoreinheiten zum Senden und/oder Empfangen von Ultraschallsignalen aufweist.

## Claims

1. Method for operating a sensor arrangement (2) in a motor vehicle (1) on the basis of a DSI protocol in a Power Function Class mode, wherein
- the sensor arrangement (2) has a central unit (3) as a master and a multiplicity of sensor units (S₁, S₂, ..., S_{N}) as slaves controlled by the master,
- the central unit (3) and the sensor units (S₁, S₂, ..., S_{N}) are connected to one another in series by means of a two-wire bus cable (4),
- the sensor units (S₁, S₂, ..., S_{N}) each have a test resistor (R_{S1}, R_{S2}, ..., R_{SN}) connected in series with the two-wire bus cable (4), an electrical test load (L₁, L₂, •••, L_{N}) that can be connected to the two-wire bus cable, and an address counter (A₁, A₂, ... , A_{N}), and
- at least three different operating phases are provided in the form of communications phases, on the one hand, and energy supply phases, on the other, that alternate with each other, and an address assignment phase (IP) preceding the communications phases and the energy supply phases, having the following steps:
- transferring information between the central unit (Z) and the sensor units (S₁, S₂, ..., S_{N}) by means of a predetermined lower voltage (V_{LOW-PWR}) and a predetermined upper voltage (V_{HIGH-PWR}) as the respective bus voltage (U_{Bus}) in the communications phases,
- supplying the sensor units (S₁, S₂, ..., S_{N}) with electrical energy by means of the central unit (Z) in the energy supply phases, in which as the bus voltage (U_{Bus}) an idle voltage (V_{IDLE}) is applied, which is at least 1 V greater than the upper voltage (V_{HIGH-PWR}),
- assigning a respective address to the individual sensor units (S₁, S₂, ... , S_{N}) in the address assignment phase by means of the following steps a) to f):
a) storing a first address in the address counters (A₁, A₂, ..., A_{N}) of all sensor units (S₁, S₂, ..., S_{N}), wherein the first address is the same for all sensor units (S₁, S₂, ..., S_{N}),
b) applying an address assignment voltage as a bus voltage (U_{Bus}), which is at least 1 V greater than the upper voltage (V_{HIGH-PWR}),
c) connecting the electrical test loads (S₁, S₂, ..., S_{N}) of all sensor units (S₁, S₂, •••, S_{N}) to the two-wire bus cable (4), so that the sensor units (S₁, S₂, ..., S_{N}) each draw a test current (I_{L1}, I_{L2}, ... I_{LN}),
d) detecting the current (I_{R1}, I_{R2}, ..., I_{R5}) flowing through each of the test resistors (R_{S1}, R_{S2}, ..., R_{SN}),
e) permanent disconnection of the electrical test load (L₁, L₂, ..., L_{N}) from the two-wire bus cable (4) in the sensor unit (S₁, S₂, ..., S_{N}) in which no current (I_{R1}, I_{R2}, ..., I_{R5}) has been detected flowing through the test resistor (R_{S1}, R_{S2}, ..., R_{SN}), and increasing the respective address by a predetermined equal value for all sensor units (S₁,S₂, ..., S_{N}) in the address counters (A₁, A₂, ..., A_{N-1}) of all other sensor units (S₁, S₂, ..., S_{N-1}), whose test load (L₁, L₂, ..., L_{N-1}) has not yet been permanently disconnected from the two-wire bus cable (4),
f) repeating the steps d) and e) for all sensor units (S₁, S₂, ..., S_{N-1}), whose test load (L₁, L₂, ..., L_{N-1}) has not yet been permanently disconnected from the two-wire bus cable (4), until in all sensor units (S₁, S₂, ..., S_{N}) the electrical test load (L₁, L₂, ..., L_{N}) has been permanently disconnected from the two-wire bus cable (4).

2. Method according to Claim 1, wherein the sensor units (S₁, S₂, ..., S_{N}) are each actuators with a respective actuator load and each have a communication load that can be connected to the two-wire bus cable (4) for communication purposes, wherein the respective actuator load is greater than the respective communication load and the actuator loads are used as test loads (L₁, L₂, ..., L_{N}) .

3. Method according to Claim 1 or 2, having the step:
- applying an address assignment voltage as a bus voltage, which is at least 1 V greater than the upper voltage and equal to at least 50% of the idle voltage.

4. Method according to Claim 3, having the step:
- applying an address assignment voltage as a bus voltage (U_{Bus}), which at least temporarily corresponds to the idle voltage (V_{IDLE}) .

5. Method according to Claim 3, having the step:
- applying an address assignment voltage as a bus voltage (U_{Bus}), which is at least temporarily equal to 25 V.

6. Method according to one of the preceding claims, wherein for step d) from the first repetition of this step onward, the following applies:
d) disconnecting the electrical test load (L₁, L₂, ..., L_{N}) from the two-wire bus cable (4) in all sensor units (S₁, S₂, ..., S_{N-1}), whose electrical test load (L₁, L₂, ..., L_{N-1}) has not yet been permanently switched off, and subsequently re-connecting the electrical test load (L₁, L₂, ..., L_{N-1}) to the two-wire bus cable (4) in all sensor units (S₁, S₂, ..., S_{N-1}) whose test load (L₁, L₂, ..., L_{N-1}) has not yet been permanently disconnected from the two-wire bus cable (4), so that these sensor units (S₁, S₂, ..., S_{N-1}) each draw a test current (I_{L1}, I_{L2}, ... I_{LN-1}), and detecting the current flowing through each of the test resistors (R_{S1}, R_{S2}, ..., R_{SN-1} of these sensor units (S₁, S₂, ..., S_{N-1}).

7. Method according to Claim 5, wherein the electrical test loads (L₁, L₂,..., L_{N}) of the sensor units (S₁, S₂, ..., S_{N}) are connected to the two-wire bus cable (4) in steps c) and d) in at least two stages, in such a way that in the first stage only a part of the test load (S₁, S₂, ..., S_{N}) is activated and then in the following stage or in the following stages each test load (L₁, L₂, ..., L_{N}) is gradually increased further.

8. Method according to Claim 6, wherein in the sensor units (S₁, S₂, ..., S_{N}) each in a subsequent stage, no further increase in the test load (L₁, L₂, ..., L_{N}) is made if in the previous stage a current (I_{R}, I_{R2}, ..., I_{R5}) flowing through the test resistor (R_{S1}, R_{S2}, ..., R_{SN}) of the respective sensor unit (S₁, S₂, ..., S_{N}) has been detected, which has exceeded a predetermined threshold value (I_{T}).

9. Method according to any one of the preceding claims, wherein the first address is 1, and when the addresses are increased an increment of 1 is made in each case.

10. Use of a method according to any one of the preceding claims in a motor vehicle (1).

11. Non-volatile, computer-readable storage medium having commands stored thereon, which when executed on a processor implement a method according to any one of Claims 1 to 9.

12. Sensor arrangement, which is configured for operation by means of a method according to any of Claims 1 to 9.

13. Sensor arrangement according to Claim 12, which comprises ultrasonic sensor units for sending and/or receiving ultrasonic signals as the sensor units (S₁, S₂, ..., S_{N}) .

## Revendications

1. Procédé permettant de faire fonctionner un agencement de capteurs (2) dans un véhicule automobile (1) sur la base d'un protocole DSI en mode classe de fonction de puissance, dans lequel
- l'agencement de capteurs (2) présente une unité centrale (3) comme maître et une pluralité d'unités de détection (S₁,S₂, ..., S_{N}) comme esclaves commandés par le maître,
- l'unité centrale (3) et les unités de détection (S₁, S₂, ..., S_{N}) sont connectées en série les unes avec les autres au moyen d'une ligne de bus bifilaire (4),
- les unités de détection (S₁, S₂, ..., S_{N}) présentent respectivement une résistance d'essai (R_{S1}, R_{S2}, ..., R_{SN}) connectée en série avec la ligne de bus bifilaire (4), une charge d'essai électrique (L₁, L₂, ..., L_{N}) pouvant être reliée à la ligne de bus bifilaire et un compteur d'adresses (A₁, A₂, ..., A_{N}), et
- au moins trois phases de fonctionnement différentes sont prévues sous la forme de phases de communication d'une part et de phases d'alimentation en énergie d'autre part qui alternent entre elles, et d'une phase d'attribution d'adresse (IP) précédant les phases de communication et les phases d'alimentation en énergie,
comprenant les étapes suivantes consistant à :
- transmettre des informations entre l'unité centrale (Z) et les unités de détection (S₁, S₂, ..., S_{N}) au moyen d'une tension inférieure prédéterminée (V_{LOW-PWR}) et d'une tension supérieure prédéterminée (V_{HIGH_PWR}) comme une tension de bus (U_{Bus}) respective dans les phases de communication,
- alimenter les unités de détection (S₁, S₂, ..., S_{N}) en énergie électrique par l'unité centrale (Z) dans les phases d'alimentation en énergie, dans lesquelles une tension en circuit ouvert (V_{IDLE}), qui est supérieure d'au moins 1 V à la tension supérieure (V_{HIGH_PWR}), est appliquée en tant que tension de bus (U_{Bus})
- affecter une adresse respective aux unités de détection (S₁, S₂, ..., S_{N}) individuelles dans la phase d'attribution d'adresse au moyen des étapes a) à f) suivantes consistant à :
a) stocker une première adresse dans les compteurs d'adresses (A₁, A₂, ..., A_{N}) de toutes les unités de détection (S₁, S₂, ..., S_{N}), la première adresse étant identique pour toutes les unités de détection (S₁, S₂, ..., S_{N}),
b) appliquer en tant que tension de bus (U_{Bus}) une tension d'attribution d'adresse qui est supérieure d'au moins 1 V à la tension supérieure (V_{HIGH_PWR}),
c) relier les charges d'essai électriques (S₁, S₂, ..., S_{N}) de toutes les unités de détection (S₁, S₂, ..., S_{N}) à la ligne de bus bifilaire (4) de sorte que respectivement un courant d'essai (I_{L1}, I_{L2}, ... I_{LN}) est consommé par les unités de détection (S₁, S₂, ..., S_{N}),
d) détecter le courant (I_{R1}, I_{R2}, ..., I_{R5}) passant respectivement par les résistances d'essai (R_{S1}, R_{S2}, ..., R_{SN}),
e) déconnecter définitivement la charge d'essai électrique (L₁, L₂, ..., L_{N}) de la ligne de bus bifilaire (4) dans l'unité de capteur (S₁, S₂, ..., S_{N}) dans laquelle aucun courant (I_{R1}, I_{R2}, ..., I_{R5}) passant par la résistance d'essai (R_{S1}, R_{S2}, ..., R_{SN}) n'a été détecté, et incrémenter l'adresse respective d'une valeur identique prédéterminée pour toutes les unités de détection (S₁, S₂, ..., S_{N}) dans les compteurs d'adresses (A₁, A₂, ..., A_{N-1}) de toutes les autres unités de détection (S₁, S₂, ..., S_{N}-1) dont la charge d'essai électrique (L₁, L₂, ..., L_{N-1}) n'a pas encore été déconnectée définitivement de la ligne de bus bifilaire (4),
f) répéter les étapes d) et e) pour toutes les unités de détection (S₁, S₂, ..., S_{N-1}) dont la charge d'essai électrique (L₁, L₂, ..., L_{N-1}) n'a pas encore été déconnectée définitivement de la ligne de bus bifilaire (4) jusqu'à ce que dans toutes les unités de détection (S₁, S₂, ..., S_{N}) la charge d'essai électrique (L₁, L₂, ..., L_{N}) ait été déconnectée définitivement de la ligne de bus bifilaire (4).

2. Procédé selon la revendication 1, dans lequel les unités de détection (S₁, S₂, ..., S_{N}) sont respectivement des actionneurs ayant une charge d'actionneur respective et présentent respectivement une charge de communication pouvant être commutée sur la ligne de bus bifilaire (4) à des fins de communication, la charge d'actionneur respective étant supérieure à la charge de communication respective et les charges d'actionneur étant utilisées en tant que charges d'essai (L₁, L₂, ..., L_{N}) .

3. Procédé selon la revendication 1 ou 2, comprenant l'étape consistant à :
- appliquer une tension d'attribution d'adresse en tant que tension de bus qui est supérieure d'au moins 1 V à la tension supérieure et est égale à au moins 50 % de la tension en circuit ouvert.

4. Procédé selon la revendication 3, comprenant l'étape consistant à :
- appliquer une tension d'attribution d'adresse en tant que tension de bus (U_{Bus}) qui correspond au moins temporairement à la tension en circuit ouvert (V_{IDLE}).

5. Procédé selon la revendication 3, comprenant l'étape consistant à :
- appliquer une tension d'attribution d'adresse en tant que tension de bus (U_{Bus}) qui est au moins temporairement égale à 25 V.

6. Procédé selon l'une quelconque des revendications précédentes, dans lequel pour l'étape d), à partir de la première itération de cette étape, il s'applique ce qui suit :
d) déconnecter la charge d'essai électrique (L₁, L₂, ..., L_{N}) de la ligne de bus bifilaire (4) dans toutes les unités de détection (S₁, S₂, ..., S_{N-1}) dont la charge d'essai électrique (L₁, L₂, ..., L_{N-1}) n'a pas encore été coupée définitivement, et par la suite, reconnecter la charge d'essai électrique (L₁, L₂, ..., L_{N-1}) à la ligne de bus bifilaire (4) dans toute les unités de détection (S₁, S₂, ..., S_{N-1}) dont la charge d'essai (L₁, L₂, ..., L_{N-1}) n'a pas encore été déconnectée définitivement de la ligne de bus bifilaire (4) de sorte que respectivement un courant d'essai (I_{L1}, I_{L2}, ..., I_{LN-1}) est consommé par ces unités de détection (S₁, S₂, ..., S_{N-1}), et détecter le courant passant respectivement par les résistances d'essai (R_{S1}, R_{S2}, ..., R_{SN-1}) de ces unités de détection (S₁, S₂, ..., S_{N-1}).

7. Procédé selon la revendication 5, dans lequel la connexion des charges d'essai électriques (L₁, L₂, ..., L_{N}) des unités de détection (S₁, S₂, ..., S_{N}) à la ligne de bus bifilaire (4) dans les étapes c) et d) est effectuée par phases en au moins deux phases de telle sorte que dans la première phase, d'abord une partie de la charge d'essai (S₁, S₂, ..., S_{N}) est activée, et ensuite, dans la ou les phases suivantes, la charge d'essai (L₁, L₂, ..., L_{N}) est respectivement augmentée progressivement davantage.

8. Procédé selon la revendication 6, dans lequel, dans les unités de détection (S₁, S₂, ..., S_{N}), respectivement dans une phase suivante, aucune augmentation de la charge d'essai (L₁, L₂, ..., L_{N}) n'est plus effectuée si dans la phase précédente un courant (I_{R1}, I_{R2}, ..., I_{R5}) passant par la résistance d'essai (R_{S1}, R_{S2}, ..., R_{SN}) de l'unité de détection (S₁, S₂, ..., S_{N}) respective a été détecté qui a dépassé une valeur seuil prédéterminée (I_{T}).

9. Procédé selon l'une quelconque des revendications précédentes, dans lequel la première adresse est 1 et une incrémentation de 1 est effectuée lors des incrémentations d'adresses.

10. Utilisation d'un procédé selon l'une quelconque des revendications précédentes dans un véhicule automobile (1).

11. Support de stockage non volatile, lisible par ordinateur, comprenant des instructions stockées sur celui-ci qui provoquent un procédé selon l'une quelconque des revendications 1 à 9 lorsqu'elles sont exécutées dans un processeur.

12. Agencement de capteurs, aménagé pour fonctionner au moyen d'un procédé selon l'une quelconque des revendications 1 à 9.

13. Agencement de capteurs selon la revendication 12, présentant comme unités de détection (S₁, S₂, ..., S_{N}) des unités de détection d'ultrasons destinées à émettre et/ou à recevoir des signaux ultrasonores.
